(19) Europäisches Patentamt
European Patent Office
Office européen des brevets

(11) **EP 2 806 057 B1**

(12) **EUROPEAN PATENT SPECIFICATION**

(45) Date of publication and mention
of the grant of the patent:
**29.06.2016  Bulletin 2016/26**

(51) Int Cl.:
*D02G 3/48* *(2006.01)*     *B60C 17/00* *(2006.01)*
*B60C 9/18* *(2006.01)*     *B60C 9/00* *(2006.01)*

(21) Application number: **14169228.5**

(22) Date of filing: **21.05.2014**

(54) **Hybrid cord and tire comprising a hybrid cord**

Hybriddraht und Reifen mit einem Hybriddraht

Câble hybride et pneu comprenant un tel câble

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **21.05.2013  US 201313898695**

(43) Date of publication of application:
**26.11.2014  Bulletin 2014/48**

(73) Proprietor: **The Goodyear Tire & Rubber Company
Akron, Ohio 44316 (US)**

(72) Inventors:
• **Assaad, Mahmoud Cherif
Copley, OH Ohio 44321 (US)**
• **Dubos, Laurent Roger Andre
L-9176 Niederfeulen (LU)**
• **Kavaturu, Mahesh
L-8049 Strassen (LU)**

(74) Representative: **Kutsch, Bernd
Goodyear S.A.
Patent Department
Avenue Gordon Smith
7750 Colmar-Berg (LU)**

(56) References cited:
**DE-A1- 4 135 599     US-B1- 6 460 588**

EP 2 806 057 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

<u>Field of the Invention</u>

The present invention is directed towards a hybrid cord suitable for use in a runflat or a non-runflat pneumatic tire, and, more specifically, towards a pneumatic tire with an overlay comprising such a hybrid cord.

<u>Background of the Invention</u>

A conventional hybrid cord, for use as an overlay in pneumatic tires, may be formed of two different materials: a low initial modulus core yarn and high modulus wrap yarns. The selection of the yarns is often such that the "inflection point" of the cord (i.e., when the slope of the force versus elongation curve changes from a relatively low slope to a relatively high slope) occurs between 2% - 3% elongation, with an ultimate cord break at over 5% elongation. Conventional hybrid overlay cord may be formed of Aramid and Nylon twisted together, wherein the inflection point of the cord occurs between 4% - 6% elongation, with an ultimate cord break at over 10% elongation. In an overlay, circumferential reinforcing effects of a strong cord are desired. However, the hybrid cord must have elongation properties to permit the tire to expand into a toroidal shape during tire shaping.

A conventional run-flat tire may have two carcass reinforcing plies and reinforcing wedge inserts in the tire sidewalls. The wedge inserts may resist radial deflection of the tire with a combination of compressive and bending stresses in both the inflated, as well as uninflated, conditions. In the uninflated condition, runflat tires may experience a net compressive load in the region of the sidewall closest to the road-contacting portion of the tire. The outer portions of the sidewall experience tensile forces while the inner portions of the sidewall undergo compression stresses during bending. The conventional runflat tire balances the necessary flexibility in the inflated condition with the necessary rigidity in the uninflated condition by employing two reinforcing carcass plies. The axially outermost ply has cords with a modulus of elasticity that increases with strain. The axially innermost ply has cords with a modulus that exceeds that of the outermost ply during normal loads in an inflated condition. Thus, the innermost ply supports the majority of the load during normal operation, while the outermost ply only support a minority of the load.

When the conventional run-flat tire is operated in an uninflated condition, the load is shifted from the axially innermost ply to the axially outermost ply and again the plies do not equally contribute to the support of the load. The outermost ply thereby does not contribute to the overall rigidity of the tire sidewall during normal operation in the inflated condition.

Another conventional runflat tire has a single carcass ply and at least one insert located adjacent the carcass ply in a sidewall portion. The insert provides support for the tire load to enable the tire to operate in an uninflated condition. The carcass ply comprises a composite cord with at least two first yarns twisted helically about at least one second yarn. The first yarns and the second yarn may have different modulus of elasticity. The first yarns may have a modulus greater than a modulus of the second yarn.

Prior art can be found in US-B-6460588.

<u>Definitions</u>

The following definitions are controlling for the disclosed invention. "Axial" and "axially" are used herein to refer to lines or directions that are parallel to the axis of rotation of the tire.

"Belt structure" means at least two annular layers or plies of parallel cords, woven or unwoven, underlying the tread, unanchored to the bead, and having cords inclined respect to the equatorial plane of the tire. The belt structure may also include plies of parallel cords inclined at relatively low angles, acting as restricting layers.

"Circumferential" means lines or directions extending along the perimeter of the surface of the annular tire parallel to the Equatorial Plane (EP) and perpendicular to the axial direction.

"Cord" means one of the reinforcement strands which a ply of a tire or an overlay of a tire comprises.

"Cord angle" means the acute angle, left or right in a plan view of the tire, formed by a cord with respect to the equatorial plane. The "cord angle" is measured in a cured but uninflated tire.

"Denier" means the weight in grams per 9000 meters (unit for expressing linear density). Dtex means the weight in grams per 10,000 meters.

"Filament count" means the number of filaments that make up a yarn. Example: 1000 Denier polyester has approximately 190 filaments.

"Yarn" is a generic term for a continuous strand of preferably textile fibers or filaments. Yarn occurs in the following forms: 1) a number of fibers twisted together; 2) a number of filaments laid together without twist; 3) a number of filaments laid together with a degree of twist; 4) a single filament with or without twist (monofilament); 5) a narrow strip of material with or without twist.

Summary of the Invention

The invention relates to a hybrid cord in accordance with claim 1 and to a pneumatic tire in accordance with claim 12.

Dependent claims refer to preferred embodiments of the inventions.

A pneumatic tire in accordance with the present invention preferably includes a carcass reinforced by a carcass ply, at least one belt ply disposed radially outward of the carcass ply in a crown portion of the pneumatic tire, and at least one overlay ply disposed radially outward of the belt ply in the crown portion of the pneumatic tire. The overlay ply includes at least one hybrid cord having a first Nylon core yarn with a second Aramid wrap yarn wrapped around the first core yarn such that the first core yarn has a modulus less than a modulus of the second wrap yarn.

In accordance with another aspect of the present invention, the first core yarn has a linear density value in the range between 700 Denier (777.78 Dtex) to 900 Denier (1000 Dtex).

In accordance with still another aspect of the present invention, the overlay ply has an end count of cord ends per inch in the range of between 15 - 32.

In accordance with yet another aspect of the present invention, the second wrap yarn has a linear density value in the range between 900 Denier (1000 Dtex) to 1100 Denier (1222.22 Dtex).

Brief Description of the Drawings

The invention will be described by way of example and with reference to the accompanying drawings in which:

FIG. 1 is a schematic representation of cross sectional view of an example tire for use with the present invention; and
FIG. 2 is a schematic representation of an example overlay cord construction in accordance with the present invention.

Detailed Description of an Example of the Present Invention

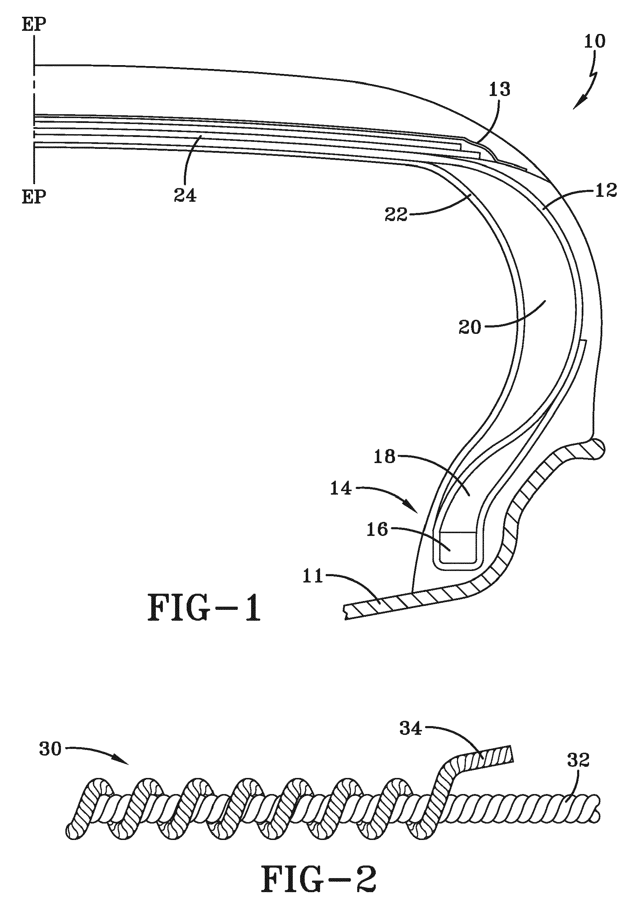

FIG. 1 is a cross-sectional view of an example pneumatic tire 10 for use with the present invention. The example tire 10 is mounted on a tire rim 11, designed to be capable of continued operation during inflated and uninflated conditions. Only one half of the tire 10 is shown, it being understood that the other half is a mirror image of that which is illustrated. The example tire 10 preferably has a single reinforcing carcass ply 12 extending from one bead area 14 of the tire to an opposing bead area (not shown). The ends of the carcass ply 12 are turned axially inward to axially outward about bead cores 16 and bead apexes 18. Terminal ends of the carcass ply 12 preferably extend past radially outer ends of the bead apexes 18 thereby enveloping the bead apexes.

Located in each sidewall region of the example tire 10, there may be a sidewall insert 20. The sidewall insert 20 may be alternatively disposed adjacent to a tire innerliner 22 (FIG. 1) or axially outward of the carcass ply 12 (not shown). The sidewall insert 20 is preferably formed of elastomeric material and may extend from a crown area of the example tire 10, from radially inward of a belt reinforcement structure 24 to radially inward of terminal ends of the bead apexes 18. The elastomeric material of the sidewall insert 20, or wedge, if present, is preferably selected to provide the example tire 10 with support during uninflated, or runflat, operation of the tire.

The belt reinforcement structure 24, disposed radially outward of the carcass ply 12, may have at least two inclined, crossed cord plies. The cords of the inclined plies are inclined with respect to a circumferential direction of the example tire 10. The cords of radially adjacent plies may further be inclined at similar, but opposing, angles to each other.

In the embodiment shown, the tire 10 has an overlay 13 outward of the belt reinforcement structure 24. The overlay 13 preferably has an axial width equal to, or greater than, a maximum axial width of the crossed cord plies of the belt reinforcement structure 24, thereby encapsulating the crossed cord plies between the overlay 13 and the carcass ply 12.

In a preferred aspect of the invention, the overlay 13 is reinforced with cords 30 inclined at angles of 0° - 15°, more preferably 0° - 3°, relative to an equatorial plane EP of the tire 10.

In accordance with the present invention, the overlay 13 is formed from at least one cord 30 as seen in FIG. 2. The example cord 30 is a composite, or hybrid, cord made of yarns and/or filaments of appropriate characteristics to provide a runflat and/or high performance tire, such as the tire 10. Preferably, the tire 10 is a passenger tire.

The cord 30 is formed of one low modulus core yarn 32 about which is twisted one higher modulus wrap yarn 34.

The construction of the cord 30 allows the lower modulus core yarn (32 in FIG. 2) of the cord 30 to work at a relatively low strain (i.e., normal operating condition) until the cord has reached a specific allowable elongation. From this point (i. e., an uninflated or high speed inflated condition), the higher modulus wrap yarn/filament (34 in FIG. 2) may limit the stretch of the cord 30.

The material for the low modulus core yarn(s) 32 is Nylon, which is polyamide 6 or polyamide 6.6. The material for the higher modulus wrap yarn/filament is Aramid (aromatic polyamide, such as poly(p-phenylenterephthalamide) (PPTA)).

Material selection is based on the desired stress/strain characteristics of the hybrid cord 30 as a whole. However, an important criteria may be that the outer wrap yarn(s)/metallic filament(s) 34 has a moduli greater than the core yarn(s) 32.

Thus, in the example embodiment of the invention, a single Aramid wrap yarn 34 together with a single Nylon core yarn 32 is used.

In the example hybrid cord 30, both the core yarn 32 and the wrap yarn 34 are twisted a given number of turns per unit of length, usually expressed in turns per 2.54 cm (TPI). Additionally, the core yarn 32 and the wrap yarn 34 are twisted together a number of 4 to 6 turns per unit of length (TPI) for the yarns, for the yarns 32, 34 of the cord 30.

The direction of twist refers to the direction of slope of the spirals of a yarn or cord when it is held vertically.

Visually, if the slope of the spirals appears to conform in direction to the slope of a letter "S," then the twist is termed "S" or "left handed". If a slope of the spirals appears to visually conform in direction to the slope of a letter "Z," then the twist is termed "Z" or "right handed".An "S" or "left handed" twist direction is understood to be a direction opposite to a "Z" or "right handed" twist.

"Twist" is understood to mean the twist imparted to a yarn or filament/yarn component before the yarn or filament/yarn component is incorporated into a cord.

"Cord twist" is understood to mean the twist imparted to two or more yarns and filaments/yarns when twisted together with one another to form the cord.

For example, a Nylon core yarn 32 having a twist of 4-6 TPI is helically wrapped with an Aramid wrap yarn 34.

The core yarn 32 and wrap yarn 34 have twists of S or Z.

Such a hybrid cord 30 used in an overlay 13 of a pneumatic tire shows good fatigue performance.

The targets for the cord 30 used in an overlay 13 are preferably a Modulus > 5000 MPa at 100°C, 100 % Adhesion. Glass Transition temperature (Tg) may be > 85°C for a gauge less than 0.56 mm.

A cord construction in accordance with the present invention is (900-1100/1 Aramid + 700-900/1 Nylon) [(4-6)Z+(4-6)Z]/(4-6)S. The Nylon core yarn 32 used has a lower Nylon Denier than conventional cords.

The twist per 2.54 cm (TPI) is optimized at the yarns level (x and y) and at the cord level (z) to ensure equal/balanced structural response.

One specific and preferred example cord 30 is (1000/1 Aramid + 840/1 Nylon)[4.7Z+5.5Z]/4.7S having a single Nylon core yarn 32 and a single Aramid wrap yarn 34. In this example, the lower Denier Nylon core yarn 32 has replaced a

conventional higher Nylon Denier core yarn. At the same time, the twist level of the Nylon yarn has been changed compared to conventional Nylon core yarn.

Another specific and preferred example cord 30 is (1000/1 Aramid + 840/1 Nylon)[4.7Z+4.7Z]/4.7S having a single Nylon core yarn 32 and a single Aramid wrap yarn 34. In this example, the lower Denier Nylon core yarn 32 has replaced a conventional higher Nylon Denier core yarn. At the same time, the twist level of the Nylon yarn has been changed compared to conventional Nylon core yarn.

Such hybrid cords 30 with a reduced amount of Nylon provide thinner cord gauges, improve tire flat spotting and reduce total cost of the hybrid cord 30. Tests showed that just replacing the conventional Nylon yarn with 840 Denier (933.33 Dtex) Nylon yarn without also adapting the twist level may cause filament breakage.

Such a cord 30 may be utilized in an overlay ply 13 of a high performance or runflat tire, such as the example tire 10. The lower nylon Denier advantageously does not adversely affect the structural response/characteristics of the cord 30. Such an advantage may thus be realized in the improved tire flat spotting and enhanced thermal stability due to the reduced volume of Nylon and superior durability performance due to higher insulation gauges. Additionally, the cord 30 may lead to a lower tire cost because of the smaller amount of Nylon.

**Claims**

1. A hybrid cord having a Nylon core yarn (32) and an Aramid wrap yarn (34) wrapped around the Nylon core yarn (32), the hybrid cord (30) having the cord construction:

$$(A/1 \text{ Aramid} + B/1 \text{ Nylon}) \ [(x)Z+(y)Z]/(z)S$$

or

$$(A/1 \text{ Aramid} + B/1 \text{ Nylon}) \ [(x)S+(y)S]/(z)Z$$

wherein A is the weight per length of the Aramid wrap yarn (34) and is in a range of from 900 to 1100 Denier (1000 to 1222.22 Dtex), B is the weight per length of the Nylon core yarn (32) and is in a range of from 700 to 900 Denier (777.78 Dtex to 1000 Dtex), x is the number twists per 2.54 cm of the Aramid wrap yarn (34) and is in a range of from 4 to 6, y is the number twists per 2.54 cm of the Nylon core yarn (32) and is in a range of from 4 to 6, and z is the number twists per 2.54 cm of the hybrid cord (30) and is in a range of from 4 to 6.

2. The hybrid cord of claim 1 wherein A is in a range of from 950 to 1050 Denier (1055.55 to 1166.67 Dtex) and wherein B is in a range of from 800 to 880 Denier (888.89 to 977.78 Dtex).

3. The hybrid cord of claim 2 wherein A is 1000 Denier (1111.11 Dtex) and B is 840 Denier (933.33 Dtex).

4. The hybrid cord of at least one of the previous claims wherein x is in a range of from 4.2 to 5.2, and wherein y is in a range of from 4.2 to 5.2 or wherein y is in the range of from 5.0 to 6.0.

5. The hybrid cord of claim 4 wherein x is 4.7 and y is 4.7, or wherein x is 4.7 and y is 5.5.

6. The hybrid cord of at least one of the previous claims wherein z is in a range of from 4.2 to 5.2.

7. The hybrid cord of claim 6 wherein z is 4.7.

8. The hybrid cord of at least one of the previous claims wherein x = y = z.

9. The hybrid cord of at least one of the previous claims wherein x = z and y = x + 0.8.

10. The hybrid cord of at least one of the previous claims wherein A = B + 160.

11. The hybrid cord of at least one of the previous claims wherein the core yarn (32) has a modulus less than the wrap yarn (34).

12. A pneumatic tire comprising a hybrid cord in accordance with at least one of the previous claims.

13. The pneumatic tire of claim 12 wherein the tire comprises a carcass reinforced by a carcass ply; at least one belt ply disposed radially outward of the carcass ply in a crown portion of the pneumatic tire; and at least one overlay ply disposed radially outward of the belt ply in the crown portion of the pneumatic tire, the overlay ply comprising at least one hybrid cord in accordance with at least one of the claims 1 to 11.

14. The pneumatic tire of claim 13 wherein the overlay ply has an end count of cord ends per 2.54 cm in the range from 15 to 32 or from 20 to 27.

15. The pneumatic tire of at least one of the claims 12 to 14 wherein the tire is a high performance passenger tire and/or a runflat passenger tire.

**Patentansprüche**

1. Hybridkord mit einem Nylon-Kerngarn (32) und einem Aramid-Hüllgarn (34), das um das Nylon-Kerngarn (32) gewickelt ist, wobei der Hybridkord (30) folgende Kordkonstruktion aufweist:

$$(A/1\ Aramid + B/1\ Nylon)\ [(x)Z + (y)Z]\ /\ (z)S$$

oder

$$(A/1\ Aramid + B/1\ Nylon)\ [(x)S + (y)S]\ /\ (z)Z,$$

wobei A das Längengewicht des Aramid-Hüllgarns (34) ist und im Bereich von 900 bis 1100 Denier (1000 bis 1222,22 dtex) liegt, B das Längengewicht des Nylon-Kerngarns (32) ist und im Bereich von 700 bis 900 Denier (777,78 dtex bis 1000 dtex) liegt, x die Anzahl von Windungen je 2,54 cm des Aramid-Hüllgarns (34) ist und im Bereich von 4 bis 6 liegt, y die Anzahl von Windungen je 2,54 cm des Nylon-Kerngarns (32) ist und im Bereich von 4 bis 6 liegt, und z die Anzahl von Windungen je 2,54 cm des Hybridkords (30) ist und im Bereich von 4 bis 6 liegt.

2. Hybridkord nach Anspruch 1, wobei A im Bereich von 950 bis 1050 Denier (1055,55 bis 1166,67 dtex) liegt und wobei B im Bereich von 800 bis 880 Denier (888,89 bis 977,78 dtex) liegt.

3. Hybridkord nach Anspruch 2, wobei A 1000 Denier (1111,11 dtex) ist und B 840 Denier (933,33 dtex) ist.

4. Hybridkord nach mindestens einem der vorhergehenden Ansprüche, wobei x im Bereich von 4,2 bis 5,2 liegt und wobei y im Bereich von 4,2 bis 5,2 liegt, oder wobei y im Bereich von 5,0 bis 6,0 liegt.

5. Hybridkord nach Anspruch 4, wobei x 4,7 ist und y 4,7 ist, oder wobei x 4,7 ist und y 5,5 ist.

6. Hybridkord nach mindestens einem der vorhergehenden Ansprüche, wobei z im Bereich von 4,2 bis 5,2 liegt.

7. Hybridkord nach Anspruch 6, wobei z 4,7 ist.

8. Hybridkord nach mindestens einem der vorhergehenden Ansprüche, wobei x = y = z.

9. Hybridkord nach mindestens einem der vorhergehenden Ansprüche, wobei x = z und y = x + 0,8.

10. Hybridkord nach mindestens einem der vorhergehenden Ansprüche, wobei A = B + 160.

11. Hybridkord nach mindestens einem der vorhergehenden Ansprüche, wobei das Kerngarn (32) einen niedrigeren Modul als das Hüllgarn (34) aufweist.

12. Luftreifen, umfassend einen Hybridkord gemäß mindestens einem der vorhergehenden Ansprüche.

13. Luftreifen nach Anspruch 12, wobei der Reifen eine durch eine Karkassenlage verstärkte Karkasse umfasst; mindestens eine radial auswärts von der Karkassenlage in einem Zenitbereich des Luftreifens angeordnete Gürtellage; und mindestens eine radial auswärts von der Gürtellage in dem Zenitbereich des Luftreifens angeordnete Overlaylage, wobei die Overlaylage mindestens einen Hybridkord gemäß mindestens einem der Ansprüche 1 bis 11 umfasst.

14. Luftreifen nach Anspruch 13, wobei die Overlaylage eine Endenzahl von Kordenden je 2,54 cm im Bereich von 15 bis 32 oder von 20 bis 27 aufweist.

15. Luftreifen nach mindestens einem der Ansprüche 12 bis 14, wobei der Reifen ein Hochleistungs-Personenwagenreifen und/oder ein Personenwagenreifen mit Notlaufeigenschaften ist.


**Revendications**

1. Câblé hybride possédant un fil central en nylon (32) et un fil d'enveloppe en aramide (34) qui entoure le fil central en nylon (32), le câblé hybride (30) possédant la structure de câblé :

$$(A/1 \ aramide + B/1 \ nylon) \ [(x)Z+(y)Z] \ / \ (z)S$$

ou

$$(A/1 \ aramide + B/1 \ nylon) \ [(x)S+(y)S] \ / \ (z)Z$$

dans laquelle A représente la masse linéaire du fil d'enveloppe en aramide (34) dont la valeur se situe dans la plage de 900 à 1100 deniers (de 1.000 à 1.222,22 dtex), B représente la masse linéaire du fil central en nylon (32) dont la valeur se situe dans la plage de 700 à 900 deniers (de 777,78 à 1.000 dtex), x représente le nombre de torsions par 2,54 cm du fil d'enveloppe en aramide (34) dont la valeur se situe dans la plage de 4 à 6, y représente le nombre de torsions par 2,54 cm du fil central en nylon (32) du câblé hybride (30), dont la valeur se situe dans la plage de 4 à 6,

2. Câblé hybride selon la revendication 1, dans lequel A se situe dans la plage de 950 à 1.050 deniers (de 1.055,55 à 1.166,67 dtex) et dans lequel B se situe dans la plage de 800 à 880 deniers (de 888,89 à 977,78 dtex).

3. Câblé hybride selon la revendication 2, dans lequel A représente 1.000 deniers (1.111,11 dtex) et B représente 840 deniers (933,33 dtex).

4. Câblé hybride selon au moins une des revendications précédentes, dans lequel x se situe dans la plage de 4,2 à 5,2 et dans lequel y se situe dans la plage de 4,2 à 5,2 ou dans lequel y se situe dans la plage de 5,0 à 6,0.

5. Câblé hybride selon la revendication 4, dans lequel x s'élève à 4,7 et y s'élève à 4,7 ou dans lequel x s'élève à 4,7 et y s'élève à 5,5.

6. Câblé hybride selon au moins une des revendications précédentes, dans lequel z se situe dans la plage de 4,2 à 5,2.

7. Câblé hybride selon la revendication 6, dans lequel z s'élève à 4,7.

8. Câblé hybride selon au moins une des revendications précédentes, dans lequel x = y = z.

9. Câblé hybride selon au moins une des revendications précédentes, dans lequel x = z et y = x + 0,8.

10. Câblé hybride selon au moins une des revendications précédentes, dans lequel A = B + 160.

11. Câblé hybride selon au moins une des revendications précédentes, dans lequel le fil central (32) possède un module inférieur à celui du fil d'enveloppe (34).

12. Bandage pneumatique comprenant un câblé hybride selon au moins une des revendications précédentes.

13. Bandage pneumatique selon la revendication 12, dans lequel le bandage pneumatique comprend une carcasse renforcée par une nappe de carcasse, au moins une nappe de ceinture disposée en direction radiale à l'extérieur de la nappe de carcasse dans une portion de sommet du bandage pneumatique et au moins une nappe de recouvrement disposée en direction radiale à l'extérieur de la nappe de ceinture dans la portion de sommet du bandage pneumatique, la nappe de recouvrement comprenant au moins un câblé hybride selon au moins une des revendications 1 à 11.

14. Bandage pneumatique selon la revendication 13, dans lequel la nappe de recouvrement possède un nombre de bouts de câblés par 2,54 cm qui se situe dans la plage de 15 à 32 ou de 20 à 27.

15. Bandage pneumatique selon au moins une des revendications 12 à 14, dans lequel le bandage pneumatique est un bandage pneumatique haute performance pour véhicule de tourisme et/ou un bandage pneumatique pour véhicule de tourisme qui permet de rouler à plat.

EP

EP

10

13

12

24

22

20

18

14

16

11

# FIG-1

30

34

32

# FIG-2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6460588 B